# FASCICULE DE BREVET EUROPEEN

(11) **EP 1 201 952 B1**
(45) Date de publication et mention de la délivrance du brevet: **29.04.2009**
(21) Numéro de dépôt: 01402699.1
(22) Date de dépôt: 18.10.2001
(51) Int. Cl.: F16D 23/04

(54) **Synchroniseur à frottements parasites réduits**
Synchronisierung mit verringerter, störender Reibung
Synchronizer with reduced parasitic friction

(30) Priorité: 23.10.2000 FR 0013554
(43) Date de publication de la demande: 02.05.2002
(73) Titulaire: Peugeot Citroën Automobiles SA, 92200 Neuilly sur Seine (FR)
(72) Inventeur: Wascheul, Michael, 78260 Acheres (FR)

(56) Documents cités:
- EP-A- 1 026 418
- DE-A- 2 510 657
- FR-A- 1 378 775
- US-A- 5 678 670

## Description

La présente invention concerne, de façon générale, un synchroniseur du type connu sous le nom de Borg-Warner et destiné à équiper une boîte de vitesse.

Un tel dispositif est connu du document EP-A-1 026 418, qui est considéré comme l'art antérieur le plus proche.

Plus précisément, l'invention concerne un synchroniseur pour boîte de vitesse, comprenant : un pignon monté fou sur un arbre; un moyeu monté fixe en rotation sur l'arbre; un manchon monté fixe en rotation sur le moyeu et axialement coulissant en translation entre une position de repos relativement distante du pignon, et au moins une position d'engagement relativement proche du pignon; une bague de synchronisation axialement mobile et disposée entre le moyeu et le pignon; au moins un organe d'appui élastique pour transmettre à la bague de synchronisation, par déplacement du manchon, une sollicitation élastique axiale; au moins deux éléments de friction pour accoupler en rotation, de façon progressive et sélective, le pignon et la bague de synchronisation lorsque celle-ci reçoit une sollicitation axiale de la part de l'organe d'appui élastique; une pluralité de dents périphériques portées par la bague de synchronisation et formant une première denture mâle; une pluralité de crabots saillant axialement du pignon en direction de la bague et formant une seconde denture mâle; une pluralité de dents taillées axialement dans une surface interne du manchon, terminées par un profil en pointe de lance en regard de la bague, délimitant des interstices, et formant une denture femelle sélectivement guidée par la première denture mâle jusque sur la seconde denture mâle lors du passage du manchon de la position de repos à la position d'engagement, chaque interstice du manchon étant bordé par une zone de retenue axiale de crabot présentant une ouverture de largeur d'entrée réduite en regard de la bague et une largeur croissante à distance de l'ouverture; et des moyens de liaison pour lier en rotation la bague au moyeu avec une tolérance de débattement angulaire d'amplitude limitée.

Les synchroniseurs de ce type sont bien connus et décrits dans la littérature spécialisée.

Un problème commun que soulève la conception de synchroniseurs, quel que soit leur type, concerne l'élimination ou la réduction de frottements parasites en fonctionnement, ainsi que des bruits, de l'inconfort d'utilisation, et des usures liés à ces frottements.

L'invention a précisément pour but de proposer un synchroniseur dont la structure permet de résoudre ce problème sans réduction des tolérances de fabrication.

A cette fin, le synchroniseur de l'invention, par ailleurs conforme à la définition générique qu'en donne le préambule ci-dessus, est essentiellement caractérisé en ce qu'il comprend au moins un couple d'éléments d'indexage de la bague par rapport au manchon, chaque couple d'éléments d'indexage comprenant une dent de guidage portée par la bague, et une rainure de guidage axiale, de largeur déterminée, creusée dans la surface interne du manchon, et présentant une ouverture tournée vers la bague, et en ce que chaque dent de guidage présente une largeur supérieure à la largeur d'entrée des zones de retenue et inférieure à la largeur de la rainure de guidage.

De préférence, l'ouverture d'au moins une rainure de guidage est au moins aussi proche de la bague que l'ouverture de chacun des interstices du manchon.

Le synchroniseur de l'invention comprend avantageusement trois couples identiques d'éléments d'indexage du manchon par rapport à la bague, incluant trois dents de guidage uniformément réparties autour la bague, et trois rainures de guidage uniformément réparties sur la surface interne du manchon.

Dans un mode de réalisation possible de l'invention, la tolérance de débattement angulaire de la bague par rapport au moyeu est au moins approximativement égale à la moitié d'un écartement entre deux dents adjacentes de la bague.

La bague peut comprendre trois secteurs dentés régulièrement répartis et séparés par trois intervalles libres, chacun des trois secteurs dentés portant des dents de la première denture mâle et une dent de guidage de préférence disposée au milieu de ce secteur.

Le moyeu peut quant à lui comprendre un voile médian et trois secteurs dentés régulièrement répartis et séparés par trois échancrures du voile médian, ces trois secteurs dentés débordant axialement du voile médian en direction de la bague et portant chacun des dents d'une troisième denture mâle engrenée en permanence avec la denture femelle du manchon.

De préférence, l'organe d'appui élastique comprend un ressort annulaire appuyé contre le voile médian dans la position de repos du manchon et sollicité vers la bague par des rampes d'armement, portées par certaines des dents du manchon qui sont disposées en regard des échancrures du voile médian du moyeu, lorsque le manchon est sollicité vers sa position d'engagement.

Les moyens de liaison comprennent alors par exemple les échancrures du voile médian du moyeu et des reliefs axiaux d'indexage portés par la bague et se débattant dans les échancrures.

Pour augmenter la compacité axiale du synchroniseur, chacun des secteurs dentés du moyeu peut présenter une partie médiane et deux parties latérales axialement en retrait par rapport à la partie médiane pour former deux logements axiaux, chaque secteur denté de la bague faisant alors face à une échancrure du voile médian et s'inscrivant axialement dans deux logements axiaux du moyeu.

Les éléments de friction peuvent, de façon connue en soi, comprendre au moins un cône de friction mâle porté par le pignon et un cône de friction femelle fixe en rotation par rapport à la bague.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en perspective éclatée d'un synchroniseur conforme à l'invention;
- la Figure 2 est une vue schématique partiellement développée et partiellement en coupe d'une partie du manchon et de dents correspondantes de la bague;
- la Figure 3 est une vue en perspective agrandie du manchon; et
- la Figure 4 est une vue en perspective agrandie de la bague.

Comme annoncé précédemment, l'invention concerne un synchroniseur pour boîte de vitesse, comprenant essentiellement un pignon 1, un moyeu 2, un manchon 3, une bague de synchronisation 4, un jonc élastique 5 jouant le rôle d'organe d'appui élastique 5, au moins deux cônes 6 et 7 jouant le rôle d'éléments de friction, et des moyens de liaison, qui seront détaillés ultérieurement, pour lier en rotation la bague 4 au moyeu 2 avec une tolérance de débattement angulaire d'amplitude limitée.

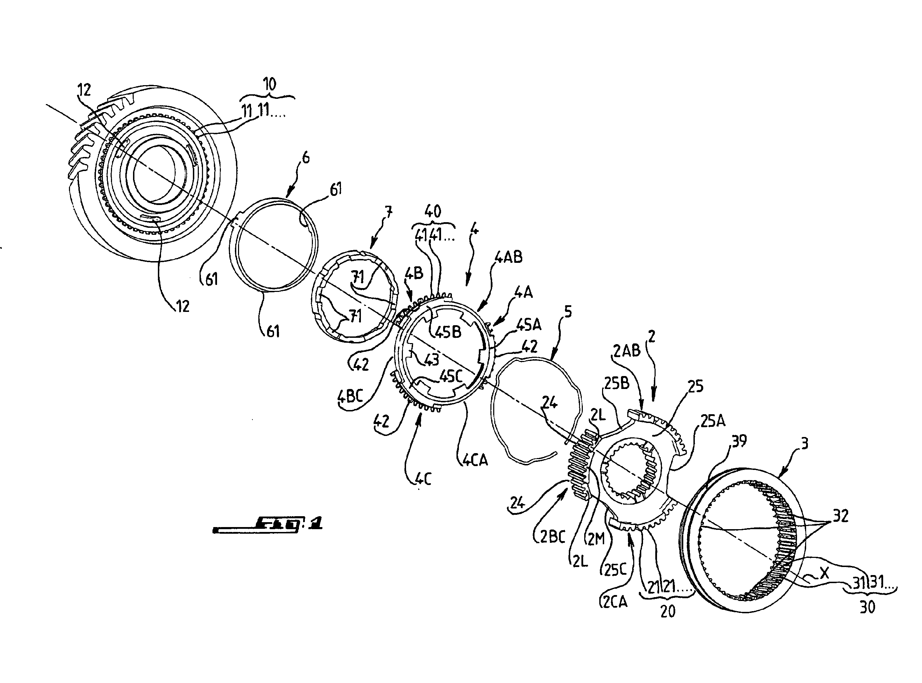

Le pignon 1 est monté fou sur un arbre, non représenté, qui est orienté suivant l'axe X de la figure 1 et sur lequel le moyeu 2 quant à lui monté fixe en rotation, le pignon et le moyeu étant tous deux montés fixes en translation axiale sur cet arbre, c'est-à-dire fixes le long de l'axe X.

Le manchon 3 est monté fixe en rotation et axialement coulissant en translation sur le moyeu 2, le coulissement de ce manchon étant commandé par une fourchette (non représentée) de boîte de vitesses, engagée dans une gorge 39 du manchon 3.

La bague de synchronisation 4 est disposée entre le moyeu 2 et le pignon 1, axialement mobile suivant l'axe X, et porte à sa périphérie une pluralité de dents 41 qui forment ensemble une première denture mâle 40.

Une pluralité de crabots 11 font saillie axialement du pignon 1, en direction de la bague 4, et forment une seconde denture mâle 10.

La surface interne du manchon 3 est garnie de dents 31, qui y sont taillées axialement, et qui forment ensemble une denture femelle 30.

Le moyeu 2 comprend des secteurs dentés, tels que 2AB, 2BC, et 2CA, avec les dents 21 desquels sont engrenées les dents 31 de la denture femelle 30 du manchon 3, cet engrènement permettant à ce manchon d'être fixe en rotation sur le moyeu 2.

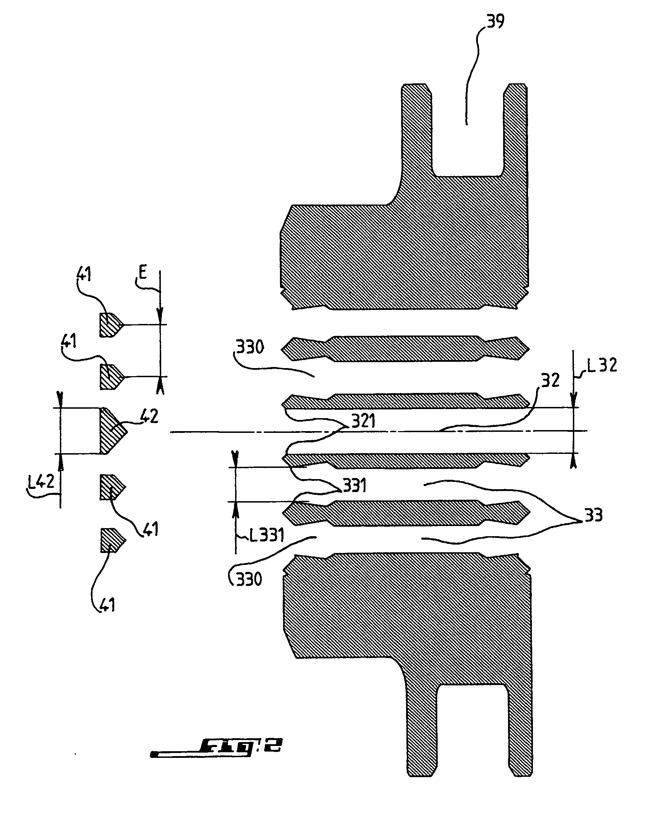

Comme le montre la figure 2, les dents 31 du manchon délimitent entre elles des interstices 33 et sont terminées chacune, en regard de la bague 4, par un profil en pointe de lance.

Chaque interstice 33 du manchon 3 est ainsi bordé par une zone 330 de retenue axiale de crabot présentant, en regard de la bague 4, une ouverture 331 de largeur d'entrée réduite L331, et une largeur croissante à distance de l'ouverture 331.

Lorsque le manchon 3, initialement dans une position de repos éloignée de la bague 4, est sollicité vers cette bague par déplacement de la fourchette insérée dans la gorge 39 du manchon 3, la denture femelle 30 de ce manchon vient d'abord en contact avec la première denture mâle 40 portée par la bague 4, puis est guidée par cette denture 40 jusque sur la seconde denture mâle 10 constituée par les crabots 11 du pignon 1, le manchon 3 atteignant alors une position d'engagement dans laquelle il rend le pignon 1 solidaire en rotation de l'arbre par l'intermédiaire du moyeu 2 et par insertion des crabots 11 dans les zones de retenue 330.

Le cône de friction mâle 6 est par exemple rendu solidaire en rotation du pignon 1 au moyen de reliefs axiaux 61 portés par ce cône 6 et engagés dans des lumières axiales 12 du pignon 1.

De même, le cône de friction femelle 7 est par exemple rendu solidaire en rotation de la bague de synchronisation 4 au moyen de pattes radiales 43 portées par la bague 4 et engagées dans des logements axiaux 71 du cône femelle 7.

Le jonc élastique ou ressort annulaire 5 a pour fonction de transmettre à la bague de synchronisation 4, d'une façon qui sera décrite plus loin, une sollicitation élastique axiale lors du déplacement du manchon 3 en direction de cette bague, de sa position de repos jusqu'à sa position d'engagement.

Lors de ce mouvement, le ressort annulaire 5 appuie axialement sur la bague 4, laquelle appuie à son tour le cône femelle 7 sur le cône mâle 6, ces cônes accouplant alors en rotation, de façon progressive et sélective, le pignon 1 et la bague de synchronisation 4.

Les moyens de liaison, qui seront décrits ultérieurement, ont quant à eux pour fonction de lier en rotation la bague 4 au moyeu 2 avec une tolérance T de débattement angulaire d'amplitude limitée, par exemple approximativement égale à la moitié de l'écartement E (figure 2) entre deux dents adjacentes 41 de la bague 4.

Le synchroniseur proposé par l'invention comprend un ou plusieurs couples particuliers d'éléments d'indexage qui permettent d'assurer, de façon très efficace et précise, un indexage en rotation de la bague 4 par rapport au manchon 3.

Plus précisément, chaque couple d'éléments d'indexage comprend d'une part une dent de guidage 42, de largeur L42, qui est portée par la bague 4, et d'autre part une rainure de guidage axiale 32, de largeur L32, qui est creusée dans la surface interne du manchon 3 et qui présente une ouverture 321 tournée vers la bague 4.

Par ailleurs, la largeur L42 de chaque dent de guidage 42 est supérieure à la largeur d'entrée L331 des zones de retenue 331 et inférieure à la largeur L32 de la rainure de guidage 32, de manière que chaque dent de guidage 42 ne puisse rentrer que dans une rainure de guidage 32 et non dans une zone de retenue 331.

Grâce à cet agencement, et du fait que la dent de guidage 42 tombe dans la rainure de guidage 32 lors du rapprochement du manchon 3 et de la bague 4, les dents 41 de la première denture mâle 40 abordent les interstices 33 en étant bien centrés sur ces interstices, ce qui évite tout accroc ou frottement parasite de ces dents 41 avec les bords découpés des zones de retenue axiale 330.

Selon le mode de réalisation préféré de l'invention, illustré aux figures et notamment à la figure 2, l'ouverture 321 de chaque rainure de guidage 32 est au moins aussi proche de la bague 4 que ne l'est l'ouverture 331 de chacun des interstices 33 du manchon 3.

Plus précisément encore, la distance entre l'ouverture 321 de chaque rainure de guidage 32 et la dent de guidage correspondante 42 de la bague 4 est au plus égale à la distance entre l'ouverture 331 de chacun des interstices 33 du manchon 3 et la dent correspondante 41 de la première denture mâle 40.

Le synchroniseur de l'invention comprend avantageusement trois couples identiques d'éléments d'indexage 32 et 42 du manchon 3 par rapport à la bague 4, incluant trois dents de guidage 42 uniformément réparties autour la bague 4, et trois rainures de guidage 32 uniformément réparties sur la surface interne du manchon 3, cet agencement permettant un guidage optimal des dents 41 dans les interstices 33.

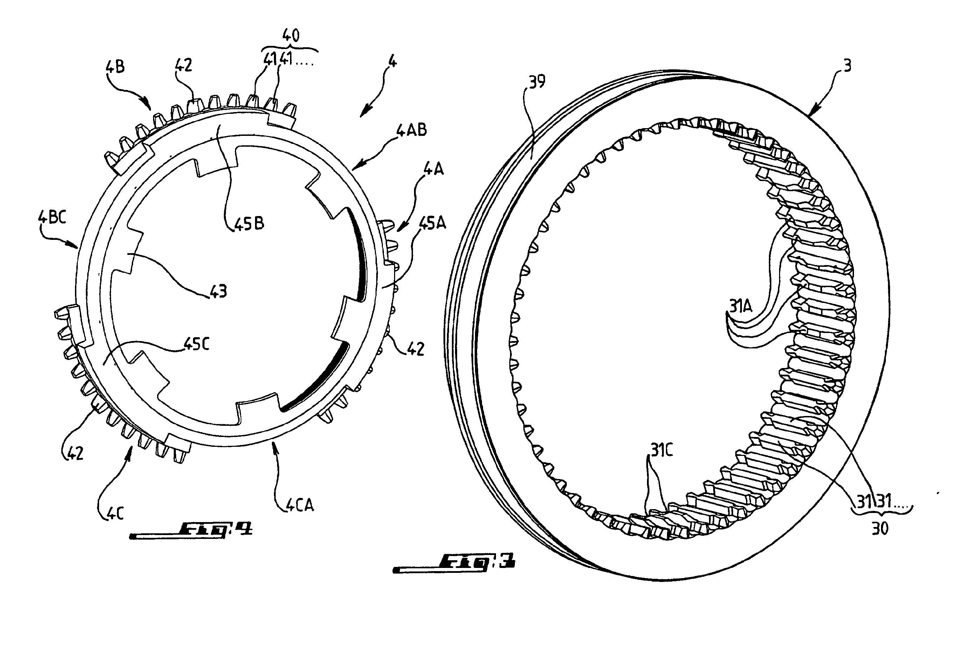

Comme le montrent notamment les figures 1 et 4, la bague 4 comprend par exemple trois secteurs dentés 4A, 4B, et 4C régulièrement répartis à la périphérie de cette bague et séparés par trois intervalles libres 4AB, 4BC, et 4CA.

Chacun de ces trois secteurs dentés 4A, 4B, et 4C porte de préférence un nombre pair de dents 41 de la première denture mâle 40, et une dent de guidage 42 disposée au milieu de ce secteur denté.

Le moyeu 2 comprend lui-même un voile médian 25 et trois secteurs dentés 2AB, 2BC, et 2CA, régulièrement répartis à la périphérie du moyeu et séparés par trois échancrures 25A, 25B, et 25C du voile médian 25.

Chacun des trois secteurs dentés 2AB, 2BC, et 2CA déborde axialement du voile médian 25 en direction de la bague 4, et porte les dents 21 qui forment ensemble une troisième denture mâle 20 engrenée en permanence avec la denture femelle 30 du manchon 3.

En réalité, la denture 20 du moyeu 2 et la denture 30 du manchon 3 peuvent, comme illustré, être symétriques par rapport à un plan perpendiculaire à l'axe X pour permettre à ce moyeu et à ce manchon de coopérer, de façon bien connue en soi de l'homme de métier, avec un second ensemble de pièces non illustré mais symétrique des autres pièces illustrées sur la figure 1 et comprenant donc un second ressort annulaire, une seconde bague, un second couple de cônes de friction, et un second pignon.

Le ressort annulaire 5, qui est appuyé contre le voile médian 25 dans la position de repos du manchon 3, est sollicité vers la bague 4 lorsque le manchon 3 est sollicité vers sa position d'engagement.

Pour ce faire, celles des dents 31 du manchon 3 qui sont disposées en regard des échancrures 25A, 25B, et 25C du voile médian 25 du moyeu 2 portent des rampes d'armement telles que 31A et 31C, qui forment des surfaces obliques par rapport à l'axe X, et qui transforment une partie de la sollicitation axiale résultant du déplacement du manchon 3 en une composante de force radiale centripète appliquée au ressort annulaire 5.

Par ses propriétés élastiques, le ressort annulaire 5 s'oppose à cette composante de force radiale, qui tend à le comprimer radialement, et offre une résistance axiale qui est transmise à la bague en tant que sollicitation axiale de celle-ci.

Les moyens de liaison, précédemment évoqués, qui permettent de lier en rotation la bague 4 au moyeu 2 avec une tolérance de débattement angulaire d'amplitude limitée, comprennent par exemple les échancrures 25A, 25B, et 25C du voile médian 25 du moyeu 2, et des reliefs axiaux d'indexage 45A, 45B, et 45C qui sont portés par la bague 4 et qui se débattent angulairement dans les échancrures 25A, 25B, et 25C.

Comme le montre la figure 1, chacun des secteurs dentés 2AB, 2BC, et 2CA du moyeu 2 présente une partie médiane 2M et deux parties latérales 2L axialement en retrait par rapport à la partie médiane 2M pour former deux logements axiaux 24.

Ainsi, chaque secteur denté 4A, 4B, et 4C de la bague 4 fait face, par sa partie médiane, à une échancrure 25A, 25B, et 25C du voile médian 25, et peut s'inscrire axialement, par ses parties latérales, dans deux logements axiaux voisins 24 du moyeu 2.

## Revendications

1. Synchroniseur pour boîte de vitesse, comprenant : un pignon (1) monté fou sur un arbre; un moyeu (2) monté fixe en rotation sur l'arbre; un manchon (3) monté fixe en rotation sur le moyeu (2) et axialement coulissant en translation entre une position de repos relativement distante du pignon (1), et au moins une position d'engagement relativement proche du pignon (1); une bague de synchronisation (4) axialement mobile et disposée entre le moyeu (2) et le pignon (1); au moins un organe d'appui élastique (5) pour transmettre à la bague de synchronisation (4), par déplacement du manchon (3), une sollicitation élastique axiale; au moins deux éléments de friction (6, 7) pour accoupler en rotation, de façon progressive et sélective, le pignon (1) et la bague de synchronisation (4) lorsque celle-ci reçoit une sollicitation axiale de la part de l'organe d'appui élastique (5); une pluralité de dents périphériques (41) portées par la bague de synchronisation (4) et formant une première denture mâle (40); une pluralité de crabots (11) saillant axialement du pignon (1) en direction de la bague (4) et formant une seconde denture mâle (10); une pluralité de dents (31) taillées axialement dans une surface interne du manchon (3), terminées par un profil en pointe de lance en regard de la bague (4), délimitant des interstices (33), et formant une denture femelle (30) sélectivement guidée par la première denture mâle (40) jusque sur la seconde denture mâle (10) lors du passage du manchon (3) de la position de repos à la position d'engagement, chaque interstice (33) du manchon (3) étant bordé par une zone (330) de retenue axiale de crabot présentant une ouverture (331) de largeur d'entrée réduite (L331) en regard de la bague (4) et une largeur croissante à distance de l'ouverture (331); et des moyens de liaison (25A, 25B, 25C; 45A, 45B, 45C) pour lier en rotation la bague (4) au moyeu (2) avec une tolérance (T) de débattement angulaire d'amplitude limitée, **caractérisé en ce qu'**il comprend au moins un couple d'éléments d'indexage (32, 42) de la bague (4) par rapport au manchon (3), chaque couple d'éléments d'indexage comprenant une dent de guidage (42) portée par la bague (4), et une rainure de guidage axiale (32), de largeur déterminée (L32), creusée dans la surface interne du manchon (3), et présentant une ouverture (321) tournée vers la bague (4), et **en ce que** chaque dent de guidage (42) présente une largeur (L42) supérieure à la largeur d'entrée (L331) des zones de retenue (331) et inférieure à la largeur (L32) de la rainure de guidage (32).

2. Synchroniseur suivant la revendication 1, **caractérisé en ce que** l'ouverture (321) d'au moins une rainure de guidage (32) est au moins aussi proche de la bague (4) que l'ouverture (331) de chacun des interstices (33) du manchon (3).

3. Synchroniseur suivant la revendication 1 ou 2, **caractérisé en ce qu'**il comprend trois couples identiques d'éléments d'indexage (32, 42) du manchon (3) par rapport à la bague (4), incluant trois dents de guidage (42) uniformément réparties autour la bague (4), et trois rainures de guidage (32) uniformément réparties sur la surface interne du manchon (3).

4. Synchroniseur suivant l'une quelconque des revendications précédentes, **caractérisé en ce que** la tolérance (T) de débattement angulaire de la bague (4) par rapport au moyeu (2) est au moins approximativement égale à la moitié d'un écartement (E) entre deux dents adjacentes (41) de la bague (4).

5. Synchroniseur suivant l'une quelconque des revendications précédentes, **caractérisé en ce que** la bague (4) comprend trois secteurs dentés (4A, 4B, 4C) régulièrement répartis et séparés par trois intervalles libres (4AB, 4BC, 4CA), chacun des trois secteurs dentés (4A, 4B, 4C) portant des dents (41) de la première denture mâle (40) et une dent de guidage (42) de préférence disposée au milieu de ce secteur (4A, 4B, 4C).

6. Synchroniseur suivant l'une quelconque des revendications précédentes, **caractérisé en ce que** le moyeu (2) comprend un voile médian (25) et trois secteurs dentés (2AB, 2BC, 2CA) régulièrement répartis et séparés par trois échancrures (25A, 25B, 25C) du voile médian (25), ces trois secteurs dentés (25A, 25B, 25C) débordant axialement du voile médian (25) en direction de la bague (4) et portant chacun des dents (21) d'une troisième denture mâle (20) engrenée en permanence avec la denture femelle (30) du manchon (3).

7. Synchroniseur suivant la revendication 6, **caractérisé en ce que** l'organe d'appui élastique (5) comprend un ressort annulaire (5) appuyé contre le voile médian (25) dans la position de repos du manchon (3) et sollicité vers la bague (4) par des rampes d'armement (31A, 31C), portées par certaines des dents (31) du manchon (3) qui sont disposées en regard des échancrures (25A, 25B, 25C) du voile médian (25) du moyeu (2), lorsque le manchon (3) est sollicité vers sa position d'engagement.

8. Synchroniseur suivant la revendication 6 ou 7, **caractérisé en ce que** les moyens de liaison (25A, 25B, 25C; 45A, 45B, 45C) comprennent les échancrures (25A, 25B, 25C) du voile médian (25) du moyeu (2) et des reliefs axiaux d'indexage (45A, 45B, 45C) portés par la bague (4) et se débattant dans les échancrures (25A, 25B, 25C).

9. Synchroniseur suivant l'une quelconque des revendications 6 à 8 combinée à la revendication 5, **caractérisé en ce que** chacun des secteurs dentés (2AB, 2BC, 2CA) du moyeu (2) présente une partie médiane (2M) et deux parties latérales (2L) axialement en retrait par rapport à la partie médiane (2M) pour former deux logements axiaux (24), et **en ce que** chaque secteur denté (4A, 4B, 4C) de la bague (4) fait face à une échancrure (25A, 25B, 25C) du voile médian (25) et s'inscrit axialement dans deux logements axiaux (24) du moyeu (2).

10. Synchroniseur suivant l'une quelconque des revendications précédentes, **caractérisé en ce que** les éléments de friction (6, 7) comprennent au moins un cône de friction mâle (6) porté par le pignon (1) et un cône de friction femelle (7) fixe en rotation par rapport à la bague (4).

## Claims

1. Synchronizer for gearbox, comprising: a pinion (1) loosely fitted on a shaft; a hub (2) mounted fixed to rotate on the shaft; a sleeve (3) mounted fixed to rotate on the hub (2) and axially sliding in translation between a rest position relatively distant from the pinion (1), and at least one engagement position relatively close to the pinion (1); an axially moving synchronization ring (4) arranged between the hub (2) and the pinion (1); at least one elastic bearing member (5) for transmitting to the synchronization ring (4), by displacement of the sleeve (3), an axial elastic stress; at least two friction elements (6, 7) for coupling in rotation, progressively and selectively, the pinion (1) and the synchronization ring (4) when the latter receives an axial stress from the elastic bearing member (5); a plurality of peripheral teeth (41) borne by the synchronization ring (4) and forming a first set of male gear teeth (40); a plurality of dogs (11) projecting axially from the pinion (1) towards the ring (4) and forming a second set of male gear teeth (10); a plurality of teeth (31) trimmed axially in an internal surface of the sleeve (3), terminated by a needle tip profile facing the ring (4), delimiting interstices (33), and forming a set of female gear teeth (30) selectively guided by the first set of male gear teeth (40) just as far as the second set of male gear teeth (10) when the sleeve (3) passes from the rest position to the engagement position, each interstice (33) of the sleeve (3) being edged by an axial dog retention zone (330) presenting an opening (331) of reduced entry width (L331) facing the ring (4) and a width increasing at distant from the opening (331); and link means (25A, 25B, 25C; 45A, 45B, 45C) for linking in rotation the ring (4) to the hub (2) with an angular clearance tolerance (T) of limited amplitude, **characterized in that** it comprises at least one pair of indexing elements (32, 42) of the ring (4) relative to the sleeve (3), each pair of indexing elements comprising a guide tooth (42) borne by the ring (4), and an axial guide groove (32), of determined width (L32), hollowed out from the internal surface of the sleeve (3), and presenting an opening (321) facing the ring (4), and **in that** each guide tooth (42) presents a width (L42) greater than the entry width (L331) of the retention zones (331) and less than the width (L32) of the guide groove (32).

2. Synchronizer according to Claim 1, **characterized in that** the opening (321) of at least one guide groove (32) is at least as close to the ring (4) as the opening (331) of each of the interstices (33) of the sleeve (3).

3. Synchronizer according to Claim 1 or 2, **characterized in that** it comprises three identical pairs of indexing elements (32, 42) of the sleeve (3) relative to the ring (4), including three guide teeth (42) evenly distributed around the ring (4), and three guide grooves (32) evenly distributed on the internal surface of the sleeve (3).

4. Synchronizer according to any one of the preceding claims, **characterized in that** the angular clearance tolerance (T) of the ring (4) relative to the hub (2) is at least approximately equal to half a base tangent length (E) between two adjacent teeth (41) of the ring (4).

5. Synchronizer according to any one of the preceding claims, **characterized in that** the ring (4) comprises three toothed sectors (4A, 4B, 4C) evenly distributed and separated by three free intervals (4AB, 4BC, 4CA), each of the three toothed sectors (4A, 4B, 4C) bearing teeth (41) of the first set of male gear teeth (40) and a guide tooth (42) preferably positioned in the middle of this sector (4A, 4B, 4C).

6. Synchronizer according to any one of the preceding claims, **characterized in that** the hub (2) comprises a median body (25) and three toothed sectors (2AB, 2BC, 2CA) evenly distributed and separated by three notches (25A, 25B, 25C) of the median body (25), these three toothed sectors (25A, 25B, 25C) axially overshooting the median body (25) in the direction of the ring (4) and each bearing teeth (21) of a third set of male gear teeth (20) permanently meshed with the female gear teeth (30) of the sleeve (3).

7. Synchronizer according to Claim 6, **characterized in that** the elastic bearing member (5) comprises an annular spring (5) pressed against the median body (25) in the rest position of the sleeve (3) and stressed towards the ring (4) by arming ramps (31A, 31C), borne by certain of the teeth (31) of the sleeve (3) which are arranged facing the notches (25A, 25B, 25C) of the median body (25) of the hub (2), when the sleeve (3) is stressed towards its engagement position.

8. Synchronizer according to Claim 6 or 7, **characterized in that** the link means (25A, 25B, 25C; 45A, 45B, 45C) comprise notches (25A, 25B, 25C) of the median body (25) of the hub (2) and axial indexing reliefs (45A, 45B, 45C) borne by the ring (4) and (engaging ??) in the notches (25A, 25B, 25C).

9. Synchronizer according to any one of Claims 6 to 8 in conjunction with Claim 5, **characterized in that** each of the toothed sectors (2AB, 2BC, 2CA) of the hub (2) presents a median part (2M) and two lateral parts (2L) axially retracted relative to the median part (2M) to form two axial recesses (24), and **in that** each toothed sector (4A, 4B, 4C) of the ring (4) faces a notch (25A, 25B, 25C) of the median body (25) and is axially inscribed in two axial recesses (24) of the hub (2).

10. Synchronizer according to any one of the preceding claims, **characterized in that** the friction elements (6, 7) comprise at least one male friction cone (6) borne by the pinion (1) and a female friction cone (7) fixed in rotation relative to the ring (4).

## Patentansprüche

1. Synchronisierung für ein Getriebe, umfassend: ein Ritzel (1), das frei drehbar auf einer Welle montiert ist; eine Nabe (2), die drehfest auf der Welle montiert ist; eine Hülle (3), die drehfest auf der Nabe (2) montiert ist und axial in Translation zwischen einer vom Ritzel (1) relativ entfernten Ruheposition und mindestens einer zum Ritzel (1) relativ nahen Eingreifposition gleitet; einen Synchronisierring (4), der axial beweglich und zwischen der Nabe (2) und dem Ritzel (1) angeordnet ist; mindestens ein elastisches Stützelement (5), um auf die Synchronisierring (4) durch Verschieben der Hülle (3) eine axiale elastische Belastung zu übertragen; mindestens zwei Reibungselemente (6, 7), um auf progressive und selektive Weise das Ritzel (1) und den Synchronisierring (4) in Drehung zu koppeln, wenn dieser vom elastischen Stützelement (5) eine axiale Belastung erhält; eine Vielzahl von Umfangszähnen (41), die vom Synchronisierring (4) getragen werden und eine erste Einsteckzahnung (40) bilden; eine Vielzahl von axial aus dem Ritzel (1) in Richtung des Ringes (4) vorspringenden Klauen (11), die eine zweite Einsteckzahnung (10) bilden; eine Vielzahl axial in eine Innenfläche der Hülle (3) eingeschnittenen Zähnen (31), die mit einem lanzenspitzartigen Profil gegenüber dem Ring (4) enden und Zwischenräume (33) begrenzen und eine Aufnahmezahnung (30) bilden, die selektiv von der ersten Einsteckzahnung (40) bis zur zweiten Einsteckzahnung (10) beim Übergang der Hülle (3) von der Ruheposition in die Eingreifposition geführt wird, wobei jeder Zwischenraum (33) der Hülle (3) von einer axialen Klauenhaltezone (330) eingesäumt ist, die eine Öffnung (331) von geringer Eingangsbreite (L331) gegenüber dem Ring (4) und eine größer werdende Breite in Entfernung von der Öffnung (331) aufweist; und Verbindungsmittel (25A, 25B, 25C; 45A, 45B, 45C), um den Ring (4) mit der Nabe (2) mit einer Winkelausschlagtoleranz (T) von begrenzter Amplitude drehfest zu verbinden, **dadurch gekennzeichnet, dass** sie mindestens ein Paar von Elementen (32, 42) zur Indexierung des Rings (4) in Bezug zur Hülle (3) umfasst, wobei jedes Paar von Indexierungselementen einen Führungszahn (42), der vom Ring (4) getragen wird, und eine axiale Führungsnut (32) von bestimmter Länge (L32) umfasst, die in der Innenfläche der Hülle (3) ausgehöhlt ist, und eine zum Ring (4) gewandte Öffnung (321) aufweist, und dass jeder Führungszahn (42) eine Breite (L42) aufweist, die größer als die Eingangsbreite (L331) der Haltezonen (331) und geringer als die Breite (L32) der Führungsnut (32) ist.

2. Synchronisierung nach Anspruch 1 oder 2, **dadurch gekennzeichnet, dass** die Öffnung (321) mindestens einer Führungsnut (32) mindestens ebenso nahe zum Ring (4) wie die Öffnung (331) zu jedem der Zwischenräume (33) der Hülle (3) ist.

3. Synchronisierung nach Anspruch 1 oder 2, **dadurch gekennzeichnet, dass** sie drei identische Paare von Elementen (32, 42) zur Indexierung der Hülle (3) in Bezug zum Ring (4) umfasst, die drei einheitlich um den Ring (4) verteilte Führungszähne (42) und drei einheitlich auf der Innenfläche der Hülle (3) verteilte Führungsnuten (32) einschließen.

4. Synchronisierung nach einem der vorhergehenden Ansprüche, **dadurch gekennzeichnet, dass** die Winkelausschlagtoleranz (T) des Ringes (4) in Bezug zur Nabe (2) mindestens annähernd gleich der Hälfte eines Abstandes (E) zwischen zwei aneinander grenzenden Zähnen (41) des Ringes (4) ist.

5. Synchronisierung nach einem der vorhergehenden Ansprüche, **dadurch gekennzeichnet, dass** der Ring (4) drei Zahnsektoren (4A, 4B, 4C) umfasst, die regelmäßig verteilt und durch drei freie Zwischenräume (4AB, 4BC, 4CA) getrennt sind, wobei jeder der drei Zahnsektoren (4A, 4B, 4C) Zähne (41) der ersten Einsteckzahnung (40) und einen Führungszahn (42) trägt, der vorzugsweise in der Mitte dieses Sektors (4A, 4B, 4C) angeordnet ist.

6. Synchronisierung nach einem der vorhergehenden Ansprüche, **dadurch gekennzeichnet, dass** die Nabe (2) einen Mittelschirm (25) und drei Zahnsektoren (2AB, 2BC, 2CA) umfasst, die regelmäßig verteilt und durch drei Ausschnitte (25A, 25B, 25C) vom Mittelschirm (25) getrennt sind, wobei diese drei Zahnsektoren (25A, 25B, 25C) axial über den Mittelschirm (25) in Richtung des Ringes (4) hinausragen und jeweils Zähne (21) einer dritten Einsteckzahnung (20) tragen, die permanent mit der Aufnahmezahnung (30) der Hülle (3) in Eingriff steht.

7. Synchronisierung nach Anspruch 6, **dadurch gekennzeichnet, dass** das elastische Stützelement (5) eine Ringfeder (5) umfasst, die am Mittelschirm (25) in der Ruheposition der Hülle (3) abgestützt ist und zum Ring (4) durch Einzugsrampen (31A, 31C) gedrückt wird, die von manchen Zähnen (31) der Hülle (3) getragen werden, die gegenüber den Ausschnitten (25A, 25B, 25C) des Mittelschirms (25) der Nabe (2) angeordnet sind, wenn die Hülle (3) in ihre Eingreifposition gedrückt wird.

8. Synchronisierung nach Anspruch 6 oder 7, **dadurch gekennzeichnet, dass** die Verbindungsmittel (25A, 25B, 25C; 45A, 45B, 45C) die Ausschnitte (25A, 25B, 25C) des Mittelschirms (25) der Nabe (2) und axiale Indexierungsreliefs (45A, 45B, 45C) umfassen, die vom Ring (4) getragen werden und in den Ausschnitten (25A, 25B, 25C) ausschlagen.

9. Synchronisierung nach einem der Ansprüche 6 bis 8 in Kombination mit Anspruch 5, **dadurch gekennzeichnet, dass** jeder der Zahnsektoren (2AB, 2BC, 2CA) der Nabe (2) einen Mittelteil (2M) und zwei Seitenteile (2L) aufweist, die axial in Bezug zum Mittelteil (2M) zurückgesetzt sind, um zwei Axiallagerungen (24) zu bilden, und dass jeder Zahnsektor (4A, 4B, 4C) des Ringes (4) einem Ausschnitt (25A, 25B, 25C) des Mittelschirms (25) gegenüber liegt und axial in zwei Axiallagerungen (24) der Nabe (2) eingeschrieben ist.

10. Synchronisierung nach einem der vorhergehenden Ansprüche, **dadurch gekennzeichnet, dass** die Reibungselemente (6, 7) mindestens einen Einsteckreibungskegel (6), der vom Ritzel (1) getragen wird, und einen Aufnahmereibungskegel (7) umfassen, der in Bezug zum Ring (4) drehfest angebracht ist.
